(19) Europäisches Patentamt / European Patent Office / Office européen des brevets

(11) **EP 3 083 521 B1**

(12) **FASCICULE DE BREVET EUROPEEN**

(45) Date de publication et mention de la délivrance du brevet:
**05.08.2020 Bulletin 2020/32**

(21) Numéro de dépôt: **14815364.6**

(22) Date de dépôt: **19.12.2014**

(51) Int Cl.:
*C04B 26/26* (2006.01)  *C04B 28/02* (2006.01)
*C04B 111/00* (2006.01)

(86) Numéro de dépôt international:
**PCT/EP2014/078621**

(87) Numéro de publication internationale:
**WO 2015/091890 (25.06.2015 Gazette 2015/25)**

(54) **ENROBES ALLEGES ET UTILISATION SUR OUVRAGES D'ART**

LEICHTE BESCHICHTETE MATERIALIEN UND VERWENDUNG BEI INGENIEURBAUWERKEN

LIGHTWEIGHT COATED MATERIALS AND USE ON ENGINEERING STRUCTURES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2013 FR 1362958**

(43) Date de publication de la demande:
**26.10.2016 Bulletin 2016/43**

(73) Titulaire: **Eurovia**
**92500 Rueil-Malmaison (FR)**

(72) Inventeurs:
• **FAUCON-DUMONT, Stéphane**
**F-33127 Martignas Sur Jalles (FR)**
• **DROUADAINE, Ivan**
**F-33160 Saint Medard En Jalles (FR)**
• **FER, Sébastien**
**F-33160 Saint Medard En Jalles (FR)**

(74) Mandataire: **Regimbeau**
**87 rue de Sèze**
**69477 Lyon Cedex 06 (FR)**

(56) Documents cités:
**WO-A1-2013/093046**

• **Islam Md Shahidul, Islam B S: "Evaluation of lightweight aggregates in chip seal", Thesis, 31 décembre 2010 (2010-12-31), pages i-88, XP002729452, Kansas State University Extrait de l'Internet: URL:http://hdl.handle.net/2097/7034 [extrait le 2014-09-09]**
• **Anonymous: "On The Surface, Lightweight Aggregate Paves the Way to Safer, More Economical and Longer Lasting Roads On The Surface", ESCSI Technical Docs , 1 janvier 2008 (2008-01-01), XP055138968, Salt Lake City Extrait de l'Internet: URL:http://www.escsi.org/uploadedFiles/Technical_Docs/Asphalt_Chip_Seal/5600.1 On the Surface LWA Paves the Way.pdf [extrait le 2014-09-09]**
• **I Hoff ET AL: "Light Weight Aggregate (LWA) Used in Road Pavements", , 31 décembre 2003 (2003-12-31), XP055138969, Extrait de l'Internet: URL:http://www.weber.com.pt/uploads/media/LightWeightAggregateRoadPavements.pdf [extrait le 2014-09-09]**

EP 3 083 521 B1

**Description**

La présente invention concerne des enrobés hydrocarbonés allégés, destinés à une application routière, en particulier sur ouvrages d'art.

Un enrobé hydrocarboné est un mélange de granulats (fines, sable et graviers), de liant et éventuellement de dopes ou d'additifs, appliqué en une ou plusieurs couches pour le revêtement des routes notamment. Dans un enrobé hydrocarboné, les granulats sont totalement recouverts, enrobés, de liant lors de la fabrication. Les enrobés hydrocarbonés sont appliqués par répandage puis compactés.

Les granulats sont des matériaux concassés et/ou criblés pour être ensuite mélangés à du liant, tel que le bitume, pour constituer des enrobés. Les granulats sont le plus souvent rocheux (du sable aux gravillons) mais ils peuvent également être issus de produits de recyclage ou de synthèse. Le mélange granulats et fines est également appelé, dans cette description, la « fraction granulaire ».

Sur la route, les enrobés hydrocarbonés jouent un rôle clé pour la sécurité et le confort des usagers. Outre les enrobés dits classiques, il existe des enrobés ayant des caractéristiques spécifiques. Les enrobés drainants, par exemple, absorbent l'eau de pluie, évitant qu'elle ne s'accumule sur la chaussée. Les enrobés acoustiques réduisent significativement les nuisances sonores provoquées par la circulation routière (bruits de roulement). Les enrobés « anti-orniérants » optimisent la conservation de la chaussée sur les axes qui supportent un trafic intense de poids lourds. La demande WO 2013/093046 décrit par exemples des enrobé ouverts auto-plaçants présentant une durabilité accrue par l'emploi de bitume modifié par des polymères, de dopes d'adhésivité, de fibres minérales et/ou synthétiques et éventuellement de chaux et/ou de ciment. Ce type de bitume permet notamment d'améliorer les propriétés mécaniques des enrobés.

Le poids de l'enrobé hydrocarboné est cependant une caractéristique limitante lorsque le revêtement routier est appliqué sur une surface hors-sol, telle que les ouvrages d'art. Pour limiter le poids du revêtement sur les surfaces hors-sol, on limite l'épaisseur de celui-ci. Par exemple, lorsqu'en pratique la couche intermédiaire d'enrobés dans les revêtements autoroutiers appliqués sur le sol a une épaisseur de 20 cm, l'épaisseur de la couche intermédiaire d'enrobés est réduite à 14 cm lorsque l'autoroute passe sur un ouvrage d'art. Cela implique une discontinuité du chantier qui augmente la durée du chantier et son coût, et des surcoûts lors de l'entretien.

On était donc à la recherche d'un enrobé qui soit suffisamment résistant et durable pour pouvoir être appliqué sur les routes, en particulier les autoroutes, et suffisamment léger pour pouvoir être appliqué sur des ouvrages d'art à une épaisseur identique aux épaisseurs utilisées sur les sols.

On a déjà décrit l'utilisation d'argile poreux, de roche expansée, telle que la vermiculite, la pouzzolane, le schiste expansé, le mica expansé, la perlite, ou de verre expansé pour remplacer tout ou partie des granulats, principalement dans le but de fabriquer des enrobés acoustiques. Ces composés expansés ayant par ailleurs une masse volumique plus faible que celle des granulats, l'enrobé en résultant est plus léger. Toutefois, en pratique la quantité d'argile expansé, de vermiculite ou autre roche ou de verre expansé que l'on peut ajouter si l'on souhaite que l'enrobé conserve de bonnes propriétés mécaniques est limitée. Ainsi, plus la quantité de verre expansé dans la formulation de l'enrobé augmente, moins l'enrobé obtenu sera résistant. Par conséquent, l'enrobé n'est pas adapté pour une application routière, encore moins sur autoroute. L'ajout d'argile poreux ou de roche poreuse, telle que la vermiculite, dans la formulation de l'enrobé exige aussi d'augmenter la teneur en liant dans la formulation. En effet, une partie du liant étant perdue dans les pores, il est nécessaire d'augmenter la teneur en liant pour conserver les mêmes propriétés de cohésion de la fraction granulaire dans l'enrobé.

Il a été découvert, de manière surprenante, qu'il était possible de fabriquer un enrobé allégé, conservant de bonnes propriétés mécaniques, en particulier résistance à l'orniérage, tenue à l'eau, perte de masse à l'essai Cantabre, en utilisant des granulats légers et non absorbants.

L'invention a pour objet des enrobés hydrocarbonés comprenant une fraction granulaire et un liant, la fraction granulaire étant un mélange de granulats et de fines étant constituée :

- des éléments ayant une taille inférieure à 0,063 mm,
- des éléments ayant une taille comprise entre 0,063 mm et 2 mm, et
- des éléments ayant une taille comprise entre 2 mm et 31,5 mm,

caractérisés en ce que dans ladite fraction granulaire, 50% à 100% en poids des éléments sont choisis parmi des granulats légers et non absorbants de masse volumique inférieure à 1,6 t/m$^3$ et ayant un coefficient d'absorption d'eau inférieur à 15% ; on calcule le coefficient d'absorption d'eau, en pourcentage de la masse sèche, noté *WA24* conformément à l'équation suivante :

$$WA24 = \frac{100 \times (M1 - M4)}{M4}$$

où :

M1 est la masse des granulats saturés et superficiellement secs dans l'air, en grammes ;
M4 est la masse de la prise d'essai séchée à l'étuve dans l'air, en grammes ;
et où la teneur en liant varie de 6 à 20 % en poids par rapport au poids total de l'enrobé,
les granulats légers et non absorbants étant de l'ardoise expansée.

Dans les enrobés hydrocarbonés, les granulats sont totalement recouverts de liant.

Les granulats légers ont une masse volumique inférieure à 1,6 t/m$^3$ et ainsi bien inférieure à la masse volumique de granulats classiques, qui sont plutôt de l'ordre de grandeur de 2,6 t/m$^3$. Les granulats légers sont aussi légers que l'argile poreux qui avait été proposé dans l'art antérieur. Avantageusement, les granulats légers et non absorbants ont avantageusement une masse volumique comprise entre 1,1 et 1,5 t/m$^3$.

En plus d'être légers, les granulats sont non absorbants. La propriété de « non absorbant » se caractérise par la mesure du coefficient d'absorption d'eau. Au sens de la présente invention, un granulat non absorbant est un granulat qui a un coefficient d'absorption d'eau inférieur à 15%, avantageusement compris entre 3 et 15%, plus avantageusement compris entre 6 et 13%.

Le coefficient d'absorption d'eau se mesure selon le protocole normalisé décrit dans la norme NF EN 1097-6 (version juin 2001 complété par la version de février 2006).

Le « coefficient d'absorption d'eau » est le rapport de l'augmentation de masse d'un échantillon de granulats à sa masse sèche, après passage à l'étuve, du fait de la pénétration de l'eau dans les pores accessibles à l'eau.

Dans l'équation suivante permettant de calculer le coefficient d'absorption d'eau (en pourcentage de la masse sèche) (WA24):

$$WA24 = \frac{100 \times (M1 - M4)}{M4}$$

où :

M1 est la masse des granulats saturés et superficiellement secs dans l'air, en grammes ;
M4 est la masse de la prise d'essai séchée à l'étuve dans l'air, en grammes ;
les masses M1 et M4 sont mesurées selon le protocole suivant. Les granulats sont immergés dans de l'eau (température ambiante, en particulier 22 ± 3°C) pendant un temps suffisant (avantageusement 24 heures). Les granulats sont ensuite récupérés, séchés au chiffon, étalés en couche mono-granulaire et laissés exposés à l'air libre mais à l'abri des rayons du soleil ou de toute autre source de chaleur jusqu'à ce que les films d'eau visibles aient disparu. On pèse les granulats (M1). Ensuite, on transfère les granulats sur un plateau et on les place dans l'étuve à une température de (110 ± 5) °C jusqu'à masse constante (M4).

En fonction de la classe granulaire, le coefficient d'absorption d'eau est mesuré par la méthode du panier en treillis ou par la méthode au pycnomètre. Pour les granulats compris entre 31,5 mm et 63 mm, on utilise la méthode du panier en treillis (les granulats sont chargés dans le panier) ; pour les granulats compris entre 4 mm et 31,5 mm ou entre 0,063 mm et 4 mm, on utilise la méthode au pycnomètre (les granulats sont chargés dans un pycnomètre rempli d'eau).

Les granulats absorbent significativement moins d'eau que le verre expansé (coefficient d'absorption d'eau de 17,9%) ou que l'argile poreux (coefficient d'absorption d'eau de 17,6%)

Ces granulats présentent par ailleurs une bonne résistance mécanique.

Ces granulats ont avantageusement un pourcentage de vide supérieur à 50%, les pores étant majoritairement des pores fermés. Ainsi, avantageusement plus de 90% en nombre des pores sont des pores fermés, avantageusement plus de 95%, et jusqu'à 100% des pores sont des pores fermés. Ces pores fermés permettent d'assurer que le liant n'est pas absorbé par les granulats. Ainsi, les propriétés de l'enrobé n'évoluent pas plus que celles d'un enrobé classique.

Le pourcentage de vide est avantageusement supérieur à 60%, plus avantageusement compris entre 65% et 80%, encore plus avantageusement compris entre 65% et 75%. Le pourcentage en vide peut être déterminé par la méthode géométrique, telle que celle décrite dans la norme NF EN 12697-6, ou par une méthode gamma densimétrie, telle que celle décrite dans la norme NF EN 12697-7.

La granulométrie de ces granulats est compatible avec une utilisation pour fabriquer des enrobés. Elle varie donc avantageusement de 0,063 mm à 31,5 mm. Elle est plus avantageusement comprise entre 0,063 mm et 20 mm. Les granulats peuvent être concassés ou non concassés. Les granulats légers de chaque classe granulaire sont non absorbants et ont ainsi un coefficient d'absorption d'eau inférieur à 15%, tel que défini précédemment.

Ces granulats légers et non absorbants sont de l'ardoise expansée, en particulier de l'ardoise expansée de Mayenne. Plus avantageusement, ces granulats sont les granulats commercialisés par la société Granulats Expansés de la Mayenne sous la marque Granulex®. Ces granulats Granulex® présentent les caractéristiques physico-chimiques suivantes :

Tableau 1

| Composition minérale | Pourcentage (en poids) |
|---|---|
| $SiO_2$ | 63% |
| $Al_2O_3$ | 21% |
| $Fe_2O_3$ | 8,5% |
| $K_2O$ | 3,6% |
| $Na_2O$ | 1,5% |
| MgO+CaO | 1,5% |
| Autres | Qsp 100% |

Ces granulats sont utilisés pour fabriquer des enrobés hydrocarbonés. Les enrobés comprennent un liant, qui enrobe la fraction granulaire.

Le liant est ce qui permet de coller les granulats entre eux et d'assurer une bonne tenue mécanique de la chaussée. Un liant peut être bitumineux ou végétal ou de synthèse.

On entend par « liant », un liant hydrocarboné, avantageusement d'origine fossile, ou tout liant d'origine végétale ou synthétique, utilisable pour la réalisation d'un enrobé hydrocarboné. Avantageusement, il s'agit d'un bitume pur, de toute composition contenant du bitume et éventuellement un ou plusieurs additifs et/ou un ou plusieurs émulsifiants et/ou un ou plusieurs viscosifiants et/ou un ou plusieurs fluxants et/ou un ou plusieurs plastifiants et/ou tout autre additif permettant d'en ajuster les propriétés, comme par exemple l'adhésivité. À titre d'exemple, on citera les bitumes, les bitumes modifiés par des élastomères et/ou des plastomères.

Ce liant bitumineux peut se trouver sous forme liquide ou sous la forme d'une émulsion ou d'une mousse. Dans le cas de la fabrication d'enrobés bitumineux à froid, le liant bitumineux se trouvera avantageusement sous la forme d'une émulsion ou d'une mousse.

Le liant peut être de tout grade. Le liant peut être un liant dur ou mou.

Dans une variante avantageuse de l'invention, on utilisera les liants routiers répondant aux normes NF EN 12591 (2009, bitumes purs) ou NF EN 13924 (2006, bitumes durs).

Dans les enrobés selon l'invention, la teneur en liant varie de 6 à 20% en poids, par rapport au poids total de l'enrobé, avantageusement de 6 à 12% en poids.

Selon l'invention, dans la fraction granulaire, 50 à 100% en poids des éléments peut être remplacé par les granulats légers et non absorbant décrits précédemment.

La taille des granulats minéraux est mesurée par les essais décrits dans la norme NF EN 933-2 (version mai 1996).

La fraction granulaire est constituée :

- des éléments inférieurs à 0,063 mm (filler ou fines)
- du sable dont les éléments sont compris entre 0,063 mm et 2 mm ;
- des gravillons, dont les éléments ont des dimensions

   ◦ comprises entre 2 mm et 6 mm ;
   ◦ supérieures à 6 mm ;

Par « fines minérales » ou « filler », on entend toute charge minérale ou siliceuse, passant à travers un tamis à maille carrée de 0,063 mm de côté. Les fines peuvent être des fines naturelles ou d'apport, par exemple des fines calcaires (carbonate de calcium), du ciment ou de la chaux hydratée, ou de récupération.

On désigne également la « fraction granulaires » par les termes « fraction minérale 0/D ». Cette fraction minérale 0/D peut être séparée en plusieurs granulométries : la fraction minérale 0/d et les fractions minérales d/D. Les éléments les plus fins (la fraction minérale 0/d) seront ceux compris dans la plage comprise entre 0 et un diamètre maximal que l'on peut fixer entre 2 et 6 mm (de 0/2 à 0/6), avantageusement entre 2 et 4 mm. Les autres éléments (diamètre minimal supérieur à 2, 3, 4, 5 ou 6 mm ; et environ jusqu'à 31,5 mm) constituent la fraction minérale d/D.

Les granulats légers et non absorbant peuvent constituer 50% à 100% en poids de la fraction granulaire. Ils peuvent constituer 50% à 100% en poids de la fraction 0/d et/ou tout ou partie de la fraction d/D.

Avantageusement, la teneur en granulats légers et non absorbants varie de 60% à 100%, en poids, plus avantageusement de 70% à 100%, en poids, par rapport au poids total de la fraction granulaire, le reste étant constitué de granulats dits « classiques ».

Les granulats dits « classiques » sont avantageusement choisis dans le groupe comprenant les granulats minéraux naturels (gravillons, sable, fines) issus de carrière ou de gravière, les produits de recyclage tel que les agrégats d'enrobés résultant du recyclage des matériaux récupérés lors de la réfection des routes ainsi que des surplus de centrales d'enrobage, les rebuts de fabrication, les granulats provenant du recyclage de matériaux routiers y compris les bétons, les laitiers en particulier les scories, les schistes en particulier la bauxite ou le corindon, les poudrettes de caoutchouc provenant du recyclage des pneus notamment, les granulats artificiels de toute origine et provenant par exemple de mâchefers d'incinération des ordures ménagères (MIOM), ainsi que leurs mélanges en toutes proportions.

On entend par « agrégats d'enrobés » des enrobés (mélange de granulats et de liants bitumineux) provenant de fraisage de couches d'enrobé, de concassage de plaques extraites de chaussées en enrobés, de morceaux de plaques d'enrobés, de déchets d'enrobé ou de surplus de productions d'enrobés (les surplus de productions sont des matériaux enrobés ou partiellement enrobés en centrale résultant des phases transitoires de fabrication). Ces éléments et les autres produits de recyclage peuvent atteindre des dimensions jusqu'à 31,5 mm.

Dans la fraction granulaire, la teneur en fines (éléments inférieurs à 0,063 mm), varie avantageusement de 5 à 25% en poids, par rapport au poids total de la fraction granulaire.

Dans la fraction granulaire, la teneur en éléments ayant une taille inférieure ou égale à 2 mm, peut varier de 20 à 100 % en poids, par rapport au poids total de la fraction granulaire.

Dans la fraction granulaire, la teneur en éléments ayant une taille comprise entre 10 mm et 31,5 mm, varie avantageusement de 20 à 100% en poids, par rapport au poids total de la fraction granulaire.

Les enrobés selon l'invention peuvent également comprendre un ou plusieurs additif(s). Des additifs peuvent être ajoutés soit au liant, soit au granulat, soit à l'enrobé.

Ces additifs sont employés à des fins mécaniques, et peuvent être de manière générale un polymère, tel que du polyéthylène, du polypropylène, des copolymères d'éthylène (comme l'EVA (copolymère d'éthylène et d'acétate de vinyle) ou l'EBA (copolymère d'éthylène et d'acrylate de butyle)), le SBS (poly(styrène-butadiène-styrène)), ou encore le SB (poly(styrène-butadiène)), réticulés ou non.

A des fins d'adhésion, on emploi des dopes d'adhésivité, par exemple des émulsifiants dérivés des polyamines.

Dans le cadre de l'abaissement des températures de fabrication et d'emploi, les additifs employés sont par exemple des huiles naturelles traitées chimiquement ou non, des zéolithes, ou encore de la paraffine.

Les additifs peuvent également être utilisés à des fins esthétiques, notamment pour un changement de couleur des produits routiers finaux. Il peut s'agir ainsi de pigment naturel ou non, tel que l'oxyde fer.

Les enrobés selon l'invention, obtenus en utilisant ces granulats légers et non absorbants, ont une masse volumique inférieure à 2,0 t/m$^3$. Avantageusement, ils ont une masse volumique comprise entre 1,5 t/m$^3$ et 2,0 t/m$^3$. Ces enrobés sont donc bien plus légers qu'un enrobé classique, qui a une masse volumique variant généralement entre 2,4 t/m$^3$ et 2,8 t/m$^3$.

Les enrobés selon l'invention ont de très bonnes propriétés mécaniques. En particulier, les enrobés selon l'invention sont identiques à des enrobés classiques en termes de performance et s'en distinguent par leur poids surfacique bien plus faible.

En particulier, les enrobés selon l'invention sont résistants à l'orniérage. Pour des enrobés bitumineux, le pourcentage d'ornières après 30 000 cycles est avantageusement inférieur à 7,5%, plus avantageusement inférieur à 5%, encore plus avantageusement inférieur à 3%. Pour des bétons bitumineux très minces, ou autres enrobés « ouverts » pour couche de roulement ou intermédiaire, le pourcentage d'ornières après 3 000 cycles est avantageusement inférieur à 10%, plus avantageusement inférieur à 8%, encore plus avantageusement inférieur à 7,5%.

La résistance à l'orniérage démontre une résistance de la couche d'enrobés à la déformation, en particulier sous forte contrainte. La couche d'enrobés déposée sera ainsi résistante au trafic, y compris des poids lourds.

Le pourcentage d'orniérage est mesuré selon le protocole décrit dans la norme NF EN 12697-22 (septembre 2007).

En outre, les enrobés selon l'invention sont résistants à la perte de masse, avec des valeurs de cantabre à 20°C avantageusement inférieures à 20, plus avantageusement inférieures à 10, encore plus avantageusement inférieures à 7.

Le cantabre est mesuré selon le protocole décrit dans la norme NF EN 12697-17 (septembre 2007).

En outre, les enrobés selon l'invention sont résistants à l'eau, avec un rapport minimal de la résistance en traction indirecte ITSR avantageusement supérieur à 70%, plus avantageusement supérieur à 80%.

Le pourcentage d'ITSR est mesuré selon le protocole décrit dans la norme NF EN 12697-12 (septembre 2008).

Ces enrobés peuvent être utilisés à chaud (130°C à 180°C), tiède (110°C à 130°C), semi-tiède (80°C à 110°C), voire à froid (T<80°C).

Dans le cas du procédé dit « à chaud », les granulats sont chauffés dans des dispositifs appelés « sécheurs », permettant ainsi une bonne adhésion du bitume au granulat. Le liant, tel que le bitume, est également chauffé, à des températures de l'ordre de 160°C afin d'en abaisser la viscosité et de permettre un bon enrobage des granulats. L'enrobé ainsi formé est ensuite appliqué chaud (typiquement à plus de 140°C) sur la chaussée puis compacté chaud également, la température initialement élevée garantissant sa maniabilité. Le matériau se rigidifie ensuite au fur et à mesure qu'il se refroidit.

Dans les procédés dits « à froid », les granulats ne sont pas séchés, et sont mélangés tels quels, c'est-à-dire avec leur humidité naturelle (plus un ajustement de la teneur en eau si nécessaire) et à température ambiante. Le liant arrive alors sous diverses formes, la plus courante étant celle d'une émulsion de bitume qui permet ainsi d'avoir un produit peu visqueux et donc maniable à température ambiante. L'émulsion est parfois légèrement réchauffée à des températures de l'ordre de 50°C. Un autre moyen, d'usage encore peu développé mais en croissance, consiste à faire mousser le bitume chaud (typiquement à 160°C) au contact d'un peu d'eau injectée directement dans le bitume selon des procédés adaptés, pour ensuite mélanger cette mousse au granulat humide. Des additifs peuvent être ajoutés au bitume et/ou à l'eau injectée pour modifier les propriétés de la mousse, notamment sa stabilité et son volume.

Les procédés dits « tièdes » ou « semi-tièdes », et dont le nom est parfois différent de celui proposé ici (semi-chaud, etc.) mais que l'homme de l'art saura reconnaître de manière non équivoque, consistent soit à légèrement réchauffer le granulat, mais pas assez pour le sécher complètement, soit à le sécher à des températures justes supérieures à 100°C. Plusieurs procédés existent, le liant pouvant par exemple être apporté sous les mêmes formes que pour les enrobés à froid (émulsion ou mousse de bitume). Également, et en particulier lorsque l'objectif est de diminuer la température de fabrication et de mise en œuvre des enrobés à chaud, afin de limiter les émissions de fumées, cela peut nécessiter l'emploi d'additifs ou de procédés originaux afin d'obtenir que l'enrobé maintienne un niveau de maniabilité compatible avec sa mise en œuvre à des températures inférieures à celles habituellement utilisées.

L'invention a également pour objet l'utilisation de granulats légers et non absorbants de masse volumique inférieure à 1,6 t/m³ et ayant un coefficient d'absorption d'eau compris entre 3 et 15%, la teneur en granulats légers et non absorbants variant de 50% à 100 % en poids par rapport au poids total de la fraction granulaire, pour la fabrication d'enrobés hydrocarbonés légers ; on calcule le coefficient d'absorption d'eau, en pourcentage de la masse sèche, noté *WA24,* conformément à l'équation suivante :

$$WA24 = \frac{100 \times (M1 - M4)}{M4}$$

où :

*M*1 est la masse des granulats saturés et superficiellement secs dans l'air, en grammes ;

*M*4 est la masse de la prise d'essai séchée à l'étuve dans l'air, en grammes

Les granulats légers et non absorbants sont tels que définis précédemment.

L'invention a aussi pour objet un revêtement de voiries obtenu par application d'au moins une couche des enrobés selon l'invention. Avantageusement, cette couche a une épaisseur supérieure ou égale à 2 cm. Un revêtement de voirie comprend avantageusement, dans le sens du sol vers l'extérieur, une couche d'assise, une couche intermédiaire, encore appelée couche de liaison, une couche de roulement.

La couche d'assise est un élément structurel principal d'une chaussée. L'assise peut être mise en œuvre en une ou plusieurs couches, appelées communément « couche de base » ou « couche de fondation ».

Une couche est un élément structurel d'une chaussée composée d'un seul matériau. Une couche peut être répandue en une ou plusieurs couches élémentaires. Une couche élémentaire est un élément de chaussée mis en œuvre en une seule opération.

Le revêtement selon l'invention est en particulier une couche de roulement, une couche intermédiaire, une couche de base. Plus avantageusement le revêtement est une couche intermédiaire.

La voirie peut être une route et plus particulièrement une autoroute.

Comme cela a déjà été exposé, ces enrobés peuvent être utilisés à chaud (130°C à 180°C), tiède (110°C à 130°C), semi-tiède (80°C à 110°C), voire à froid (T<80°C).

L'invention concerne enfin un procédé pour appliquer un revêtement de voirie sur une surface hors-sol comprenant une étape d'application d'enrobés tels que définis selon l'invention. Comme cela a déjà été exposé, ces enrobés peuvent être utilisés à chaud (130°C à 180°C), tiède (110°C à 130°C), semi-tiède (80°C à 110°C), voire à froid (T<80°C). Avantageusement, les enrobés selon l'invention sont appliqués en tant que couche intermédiaire.

Il est tout à fait intéressant de noter qu'une couche de 20 cm d'enrobés selon l'invention pourra avoir la même densité qu'une couche de 14 cm d'enrobés classiques. Cela permet notamment d'appliquer une même épaisseur de couche d'enrobés lors de l'application d'un revêtement routier, que celui-ci soit supporté par le sol ou en hors-sol, par exemple un ouvrage d'art, avec une génération de charge moindre.

La surface hors-sol est avantageusement un ouvrage d'art, une terrasse, un parking suspendu.

## EXEMPLES

### Exemple 1 : caractéristiques de granulats légers et non absorbant selon l'invention

Les caractéristiques de coefficient d'absorption et de masse volumique pour des granulats légers selon l'invention sont comparées dans le tableau suivant aux caractéristiques de l'argile expansé et du verre expansé

Tableau 2

|  | granulats légers selon l'invention | | Argile expansé | Verre Expansé |
|---|---|---|---|---|
|  | non concassé | concassé |  |  |
| Coefficient d'absorption d'eau (%) NF EN 1097-6 | **7,7** | **11,0** | 17,6 | 17,9 |
| Masse volumique absolue (t/m3) NF EN 1097-6 | 1,262 | 1,308 | 1,169 | 0,420 |

On constate que les granulats légers ont une masse volumique comparable à celle de l'argile expansé. Par contre, les granulats selon l'invention ont un coefficient d'absorption significativement plus faible que celui de l'argile ou du verre expansé.

### Exemple 2 : enrobés allégés selon l'invention

Un exemple de formulation d'enrobé allégé selon l'invention, pour couche intermédiaire avec une fraction granulaire 0/14 et un bitume de grade 35/50, est donné dans le tableau suivant :

Tableau 3

| Matériaux | % en poids |
|---|---|
| 10/14 Granulat léger (%) | **31,8** |
| 4/10 granulat léger (%) | **9,1** |
| 0/2 Granulat léger (%) | **27,3** |
| 0/2 Diorite (%) | **18,2** |
| Filler (%) | **4,5** |
| bitume 35/50 (%) | **9,1** |

Les propriétés mécaniques des enrobés obtenus par un procédé à chaud à partir de cette formulation sont données dans le tableau suivant :

Tableau 4

| | |
|---|---|
| Masse volumique réelle NF EN 1267-5 (g/cm3) | **1,697** |
| **PCG** (NF EN 12697-31) Nombre giration vide (%) | **100** **10,9** |
| **ITSR** (NF EN 12697-12 A) ITS air (kPa) | **859** |

(suite)

| | |
|---|---|
| ITS eau (kPa) | **840** |
| ITSR % | **97,8** |
| **Orniérage** (NF EN 12697-22) | |
| **nombre de cycles** | **30000** |
| ornière (%) | **1,9** |
| **Module** (NF EN 12697-26) | |
| E* 15°C 10Hz (Mpa) | **7059** |
| **Perte de masse Cantabre à 20°C %** | **5,6** |
| (NF EN 12697-17) | |

Les propriétés mécaniques de ces enrobés sont comparées avec des enrobés préparés à chaud à partir de la même formulation mais dans laquelle les granulats légers sont remplacés soit par de la vermiculite soit par du verre expansé. Les résultats sont donnés dans le tableau suivant :

Tableau 5

| | F1 | F2 | F3 |
|---|---|---|---|
| ESSAI | Enrobé 0/14 allégé à base de Vermiculite | Enrobé 0/14 allégé à base de verre expansé | Enrobé 0/14 allégé selon la revendication |
| NF EN 12697-22 Orniérage Orniérage à 30 000 cycles (%) - - | 6,90% | >15% | 1,90% |
| masse volumique réelle de l'enrobé selon NF EN 12697-5 t/m3 | 1.752 | 1,79 | 1.697 |

On constate donc que les enrobés selon l'invention sont à la fois légers mais présentent des propriétés mécaniques, en particulier une résistance à l'orniérage, qu'il n'était pas possible d'obtenir avec les roches poreuses ou le verre expansé.

Un autre exemple de formulation d'enrobé bitumineux allégé selon l'invention, pour couche de liaison avec une fraction granulaire 0/10 et un bitume de grade 20/30, est donné dans le tableau suivant :

Tableau 6

| Matériaux | % en poids |
|---|---|
| 4/10 Granulat léger (%) | **31,4** |
| 0/4 granulat léger (%) | **35,9** |
| 0/2 Diorite (%) | **18,2** |
| Filler (%) | **4,5** |
| bitume 20/30 (%) | **10,0** |

Les propriétés mécaniques des enrobés obtenus par un procédé à chaud à partir de cette formulation sont données dans le tableau suivant :

Tableau 7

| | |
|---|---|
| Masse volumique réelle NF EN 1267-5 (g/cm3) | **1,697** |
| **PCG** (NF EN 12697-31) Nombre giration | **60** |

(suite)

| | |
|---|---|
| vide (%) | 9,7 |
| **ITSR** *(NF EN 12697-12 A)* <br> ITS air (kPa) <br> ITS eau (kPa) <br> ITSR % | 1100 <br> 1054 <br> 95,8 |
| **Orniérage** *(NF EN 12697-22)* <br> **nombre de cycles** <br> ornière (%) | 30000 <br> 4,2 |
| **Module** *(NF EN 12697-26)* <br> E* 15°C 10Hz (Mpa) | 9200 |

Les propriétés mécaniques de l'enrobé allégé sont aussi bonnes que celles d'un enrobé classique alors que la masse volumique de l'enrobé est significativement allégée.

Un autre exemple de formulation d'enrobé allégé selon l'invention, pour couche de roulement, avec une fraction granulaire 0/10 et un bitume de grade 35/50, est donné dans le tableau suivant :

Tableau 8

| Matériaux | % en poids |
|---|---|
| 4/10 Granulat léger (%) | 49,1 |
| 0/4 Granulat léger (%) | 21,8 |
| 0/2 Diorite (%) | 18,2 |
| Filler (%) | 1,8 |
| bitume 35/50 (%) | 9,1 |

Les propriétés mécaniques des bétons bitumineux très minces (BBTM) obtenus à partir de cette formulation sont données dans le tableau suivant :

Tableau 9

| | |
|---|---|
| Masse volumique réelle <br> NF EN 1267-5 (g/cm3) | 1,606 |
| **PCG** *(NF EN 12697-31)* <br> Nombre giration <br> vide (%) | 25 <br> 22,5 |
| **ITSR** *(NF EN 12697-12 A)* <br> ITS air (kPa) <br> ITS eau (kPa) <br> ITSR % | 752 <br> 684 <br> 91 |
| **Orniérage** *(NF EN 12697-22)* <br> **nombre de cycles** <br> ornière (%) | 3000 <br> 7 |

Les propriétés mécaniques du BBTM allégé sont aussi bonnes que celles d'un BBTM classique alors que la masse volumique du BBTM est significativement allégée.

**Revendications**

1. Enrobés hydrocarbonés comprenant une fraction granulaire et un liant, la fraction granulaire étant un mélange de granulats et de fines et étant constituée :

   - des éléments ayant une taille inférieure à 0,063 mm,
   - des éléments ayant une taille comprise entre 0,063 mm et 2 mm, et
   - des éléments ayant une taille comprise entre 2 mm et 31,5 mm,

   **caractérisés en ce que** dans ladite fraction granulaire 50% à 100% en poids des éléments sont choisis parmi des granulats légers et non absorbants de masse volumique inférieure à 1,6 t/m$^3$ et ayant un coefficient d'absorption d'eau inférieur à 15% ; on calcule le coefficient d'absorption d'eau,en pourcentage de la masse sèche, noté *WA24,* conformément à l'équation suivante :

$$WA24 = \frac{100 \times (M1 - M4)}{M4}$$

   où :

   $M1$ est la masse des granulats saturés et superficiellement secs dans l'air, en grammes ;
   $M4$ est la masse de la prise d'essai séchée à l'étuve dans l'air, en grammes, et où
   la teneur en liant varie de 6 à 20 % en poids, par rapport au poids total de l'enrobé,
   les granulats légers et non absorbants étant de l'ardoise expansée.

2. Enrobés selon la revendication 1, **caractérisés en ce que** les granulats légers et non absorbants ont une masse volumique comprise entre 1,1 et 1,5 t/m$^3$

3. Enrobés selon l'une quelconque des revendications précédentes, **caractérisés en ce que** les granulats légers et non absorbants ont un coefficient d'absorption d'eau compris entre 6 et 15 %.

4. Enrobés selon l'une quelconque des revendications précédentes, **caractérisés en ce que** la teneur en granulats légers et non absorbants varie de 60% à 100% en poids, par rapport au poids total de la fraction granulaire.

5. Enrobés selon l'une quelconque des revendications précédentes, **caractérisés en ce qu'**ils ont une masse volumique inférieure à 2 t/m3.

6. Enrobés selon l'une quelconque des revendications précédentes, **caractérisés en ce qu'**ils sont résistants à l'orniérage, avantageusement avec un pourcentage d'ornières après 30 000 cycles inférieur à 7,5%, avantageusement inférieur à 5%.

7. Enrobés selon l'une quelconque des revendications précédentes, **caractérisés en ce qu'**ils sont résistants à la perte de masse, avec des valeurs de Cantabre inférieures à 20, avantageusement inférieures à 10.

8. Enrobés selon l'une quelconque des revendications précédentes, **caractérisés en ce qu'**ils sont résistants à l'eau, avec un pourcentage d'ITSR supérieur à 70%, avantageusement supérieur à 80%.

9. Utilisation de granulats légers et non absorbants de masse volumique inférieure à 1,6 t/m$^3$ et ayant un coefficient d'absorption d'eau compris entre 3 et 15%, la teneur en granulats légers et non absorbants variant de 50% à 100% en poids, par rapport au poids total de la fraction granulaire, pour la fabrication d'enrobés hydrocarbonés légers ; on calcule le coefficient d'absorption d'eau, en pourcentage de la masse sèche, noté *WA24,* conformément à l'équation suivante :

$$WA24 = \frac{100 \times (M1 - M4)}{M4}$$

   où :

*M*1 est la masse des granulats saturés et superficiellement secs dans l'air, en grammes ;
*M*4 est la masse de la prise d'essai séchée à l'étuve dans l'air, en grammes ; les granulats légers et non absorbants étant de l'ardoise expansée.

10. Revêtement de voiries obtenu par application d'au moins une couche des enrobés selon l'une quelconque des revendications 1 à 8.

11. Revêtement de voiries selon la revendication 10, **caractérisé en ce que** le revêtement est une couche de roulement, une couche intermédiaire, une couche de base.

12. Procédé pour appliquer une couche de roulement sur une surface hors-sol, avantageusement sur un ouvrage d'art, comprenant une étape d'application d'enrobés tels que définis à l'une quelconque des revendications 1 à 8.

**Patentansprüche**

1. Kohlenwasserstoffasphalt, umfassend eine Granulat-Fraktion und ein Bindemittel, wobei die Granulat-Fraktion ein Gemisch aus Granulaten und Feinstoffen ist und aus Folgendem besteht:

   - Elementen, die eine Größe von weniger als 0,063 mm aufweisen,
   - Elementen, die eine Größe aufweisen, die zwischen 0,063 mm und 2 mm enthalten ist, und
   - Elementen, die eine Größe aufweisen, die zwischen 2 mm und 31,5 mm enthalten ist,

   **dadurch gekennzeichnet, dass** in der Granulat-Fraktion 50 Gew.-% bis 100 Gew.-% der Elemente aus leichten und nicht absorbierenden Granulaten mit einer Rohdichte von weniger als 1,6 t/m$^3$ ausgewählt sind, und einen Wasserabsorptionskoeffizienten von weniger als 15 % aufweisen; der Wasserabsorptionskoeffizient in Trockenmasseprozenten, als *WA24* bezeichnet, entsprechend der folgenden Gleichung berechnet wird:

$$WA24 = \frac{100 \times (\mathrm{M1} - \mathrm{M4})}{\mathrm{M4}}$$

   wobei:

   *M*1 die Masse der gesättigten und oberflächlich trockenen Granulate in der Luft, in Gramm, ist;
   *M*4 die Masse der im Trockenofen getrockneten Versuchsprobe in der Luft, in Gramm, ist und wobei
   der Bindemittelgehalt von 6 bis 20 Gew.-% in Bezug auf das Gesamtgewicht der Kohlenwasserstoffasphalt variiert,
   die leichten und nicht absorbierenden Granulate expandierter Schiefer sind.

2. Kohlenwasserstoffasphalt nach Anspruch 1, **dadurch gekennzeichnet, dass** die leichten und nicht absorbierenden Granulate eine Rohdichte aufweisen, die zwischen 1,1 und 1,5 t/m$^3$ enthalten ist.

3. Kohlenwasserstoffasphalt nach einem der vorstehenden Ansprüche, **dadurch gekennzeichnet, dass** die leichten und nicht absorbierenden Granulate einen Wasserabsorptionskoeffizienten aufweisen, der zwischen 6 und 15 % enthalten ist.

4. Kohlenwasserstoffasphalt nach einem der vorstehenden Ansprüche, **dadurch gekennzeichnet, dass** der Gehalt an leichten und nicht absorbierenden Granulaten von 60 Gew.-% bis 100 Gew.-% in Bezug auf das Gesamtgewicht der Granulat-Fraktion variiert.

5. Kohlenwasserstoffasphalt nach einem der vorstehenden Ansprüche, **dadurch gekennzeichnet, dass** sie eine Rohdichte von weniger als 2t/m$^3$ aufweisen.

6. Kohlenwasserstoffasphalt nach einem der vorstehenden Ansprüche, **dadurch gekennzeichnet, dass** sie beständig gegenüber Spurrinnenbildung sind, vorteilshalber mit einem Spurrinnenprozentsatz nach 30.000 Zyklen von weniger als 7,5 %, vorteilshalber weniger als 5 %.

7. Kohlenwasserstoffasphalt nach einem der vorstehenden Ansprüche, **dadurch gekennzeichnet, dass** sie beständig gegenüber Masseverlust sind, mit Cantabre-Werten von unter 20, vorteilshalber unter 10.

8. Kohlenwasserstoffasphalt nach einem der vorstehenden Ansprüche, **dadurch gekennzeichnet, dass** sie wasserbeständig sind, mit einem ITSR-Prozentsatz von mehr als 70%, vorteilshalber mehr als 80 %.

9. Verwendung von leichten und nicht absorbierenden Granulaten mit einer Rohdichte von weniger als 1,6 t/m³ und einen Wasserabsorptionskoeffizienten aufweisend, der zwischen 3 und 15 % enthalten ist, wobei der Gehalt an leichten und nicht absorbierenden Granulaten von 50 Gew.-% bis 100 Gew.-% in Bezug auf das Gesamtgewicht der Granulat-Fraktion variiert, für die Herstellung von leichten Kohlenwasserstoffasphalt;
wobei der Wasserabsorptionskoeffizient in Trockenmasseprozenten, als *WA24* bezeichnet, entsprechend der folgenden Gleichung berechnet wird:

$$WA24 = \frac{100 \times (M1 - M4)}{M4}$$

wobei:

$M1$ die Masse der gesättigten und oberflächlich trockenen Granulate in der Luft, in Gramm, ist;
$M4$ die Masse der im Trockenofen getrockneten Versuchsprobe in der Luft, in Gramm, ist;
die leichten und nicht absorbierenden Granulate expandierter Schiefer sind.

10. Straßenbelag, der durch Auftragen mindestens einer Schicht der Kohlenwasserstoffasphalt nach einem der Ansprüche 1 bis 8 erhalten wird.

11. Straßenbelag nach Anspruch 10, **dadurch gekennzeichnet, dass** der Kohlenwasserstoffasphalt eine Rollschicht, eine Zwischenschicht, eine Grundschicht ist.

12. Verfahren zum Auftragen einer Rollschicht auf einer Oberfläche über dem Boden, vorteilshalber auf einem Bauwerk, umfassend einen Schritt des Auftragens von Kohlenwasserstoffasphalt nach einem der Ansprüche 1 bis 8.

**Claims**

1. Asphalt mixes comprising an aggregate fraction and a binder, the aggregate fraction being a mixture of aggregates and fines and being formed by:

   - components with a size below 0.063 mm,
   - components with a size comprised between 0.063 mm and 2 mm, and
   - components with a size comprised between 2 mm and 31.5 mm,

   **characterised in that** in said aggregate fraction 50% to 100% by weight of the components are selected from lightweight and non-absorbent aggregates with a density of less than 1.6 t/m³ and having a coefficient of water absorption of less than 15%; the coefficient of water absorption is calculated, as a percentage of the dry mass, denoted *WA24,* according to the following equation:

$$WA24 = \frac{100 \times (M1 - M4)}{M4}$$

   where:

   $M1$ is the mass of saturated aggregates and superficially dry aggregates in air, in grams;
   $M4$ is the mass of the test sample oven-dried in air, in grams, and where the content of binder varies from 6 to 20% by weight, relative to the total weight of the asphalt mixes,
   the lightweight and non-absorbent aggregates being expanded slate.

**2.** Asphalt mixes according to claim 1, **characterised in that** the lightweight and non-absorbent aggregates have a density comprised between 1.1 and 1.5 t/m$^3$.

**3.** Asphalt mixes according to any of the preceding claims, **characterised in that** the lightweight and non-absorbent aggregates have a coefficient of water absorption comprised between 6 and 15%.

**4.** Asphalt mixes according to any of the preceding claims, **characterised in that** the content of lightweight and non-absorbent aggregates varies from 60% to 100% by weight, relative to the total weight of the aggregate fraction.

**5.** Asphalt mixes according to any of the preceding claims, **characterised in that** they have a density of less than 2 t/m3.

**6.** Asphalt mixes according to any of the preceding claims, **characterised in that** they are resistant to rutting, advantageously with a percentage of rutting after 30,000 cycles of less than 7.5%, advantageously less than 5%.

**7.** Asphalt mixes according to any of the preceding claims, **characterised in that** they are resistant to mass loss, with Cantabrian values less than 20, advantageously less than 10.

**8.** Asphalt mixes according to any of the preceding claims, **characterised in that** they are resistant to water, with an ITSR percentage greater than 70%, advantageously greater than 80%.

**9.** Use of lightweight and non-absorbent aggregates with a density below 1.6 t/m$^3$ and a coefficient of water absorption comprised between 3 and 15%, the content of lightweight and non-absorbent aggregates varying from 50% to 100% by weight, relative to the total weight of the aggregate fraction, for the production of lightweight asphalt mixes; the coefficient of water absorption is calculated, as a percentage of the dry mass, denoted *WA24,* according to the following equation:

$$WA24 = \frac{100 \times (M1 - M4)}{M4}$$

where:

*M*1 is the mass of saturated aggregates and superficially dry aggregates in air, in grams;
*M*4 is the mass of the test sample oven-dried in air, in grams;
the lightweight and non-absorbent aggregates being expanded slate.

**10.** Roadway pavement obtained by application of at least one layer of asphalt mixes according to any of claims 1 to 8.

**11.** Roadway pavement according to claim 10, **characterised in that** the pavement is a surface course, an intermediate course and a base course.

**12.** Method for applying a surface course onto an above-ground surface, advantageously an engineering structure, comprising a step of applying asphalt mixes as defined in any of claims 1 to 8.

**EP 3 083 521 B1**

## RÉFÉRENCES CITÉES DANS LA DESCRIPTION

**Documents brevets cités dans la description**

- WO 2013093046 A